# EUROPEAN PATENT SPECIFICATION

(11) **EP 0 397 484 B1**
(45) Date of publication and mention of the grant of the patent: **10.09.1997**
(21) Application number: 90305024.3
(22) Date of filing: 10.05.1990
(51) Int. Cl.: C08G 63/18, C09D 167/02

(54) **Polyester coating compositions containing 2-methyl-1, 3-propanediol**
Beschichtungsmassen auf Basis von Polyestern, die 2-Methyl-1,3-propandiol enthalten
Compositions de revêtement à base de polyesters contenant du 2-méthyl-1,3-propanediol

(30) Priority: 11.05.1989 US 350491
(43) Date of publication of application: 14.11.1990
(73) Proprietor: ARCO Chemical Technology, L.P., Greenville, Delaware 19807 (US)
(72) Inventor: Sullivan, Carl J., Exton, Pennsylvania 19341 (US)
(74) Representative: Cropp, John Anthony David

(56) References cited:
- GB-A- 2 095 267
- US-A- 4 072 662
- US-A- 4 229 555
- DERWENT ACCESSION NO. 84-167 890, Questel Tele- systems (WPIL) DERWENT PUBLICATIONS LTD., London

## Description

The present invention relates to a linear polyester suitable for use in coating applications. More specifically, this invention relates to a linear polyester containing recurring units of 2-methyl-1,3-propanediol and a cyclic dicarboxylic acid. The linear polyester is used as a component of a resin composition containing an aminoplast cross-linking agent and a catalyst; the resin composition may be cured to yield a hard, yet flexible, coating.

### BACKGROUND OF THE INVENTION

The use of thermosettable resin compositions containing low molecular weight polyesters as protective coatings for substrates such as steel coil is known in the art. An ideal protective coating would be a coating which adheres well to the substrate, is simultaneously hard and flexible, and is resistant to solvents, abrasion, and dry heat. A combination of such properties in a polyester-based coating is ordinarily quite difficult to achieve since often one property can only be enhanced at the expense of another property. For example, excellent flexibility is essential in order that the cured coating not fail during the substrate shaping process which normally follows application of the coating. At the same time, high hardness is desirable for aesthetic reasons and for greater durability and resistance to stains and solvents. One approach to enhancing hardness is to increase the cyclic (i.e., the proportion of aromatic or cycloaliphatic recurring units) content of the polyester. However, a high cyclic content tends to result in inflexible or brittle coatings. Another way to increase hardness is to incorporate significant amounts of a polyol having three or more hydroxy groups into the polyester. The polyester is consequently highly branched rather than linear and tends to decrease the flexibility of the cured coating. Problems with premature gelation are sometimes also observed with such branched polyesters.

Ideally, the polyester should also be non-crystallizable and freely soluble in common organic solvents. Resin compositions are normally applied in solution form in order to lower the viscosity of the neat polyester/aminoplast mixture. Since a polyester typically is stored for an extended period of time prior to application, it is important that the polyester not crystallize or precipitate out of solution. Increasing the cyclic content of a polyester in order to enhance the hardness of a cured coating, particularly if the dicarboxylic acid component is terephthalic acid, tends to increase the crystallizability of the polyester and to decrease its solubility in organic solvents.

The following patents are representative of the polyester resin coating art and illustrate some of the approaches which have been taken to resolve the property trade-off dilemmas herein described.

JP-A-59 91118 discloses a linear polyester polyol of adipic acid and 2-methyl-1,3-propane diol.

U.S. Pat. No. 3,804,920 teaches the use of a blend of a high cyclic content polyester and a low cyclic content polyester in a resin coating composition.

U.S. Pat. No. 4,140,729 describes a resin composition containing a polyester with high cyclic content. Flexibility and non-crystallinity are provided by the incorporation of 1,6-hexanediol in the polyester.

U.S. Pat. Nos. 4,229,555 and 4,393,121 teach high cyclic content polyesters containing small amounts of an aliphatic dicarboxylic acid to enhance the flexibility of the cured resin composition.

U.S. Pat. No. 4,520,188 discloses a polyester comprised of neopentyl glycol, 1,4-cyclohexanedimethanol, aliphatic diacid, terephthalic acid, and at least one other aromatic dicarboxylic acid which is useful for the preparation of coatings having a satisfactory overall balance of properties.

Clearly, there is a need for polyester resin compositions which are readily prepared, solvent stable, and noncrystallizable and which provide cured coatings which are hard, non-brittle, glossy, and resistant to stains and abrasion.

### SUMMARY OF THE INVENTION

This invention provides a linear polyester suitable for use in a thermoset resin coating of improved flexibility and hardness. The linear polyester is comprised of (a) from about 40 to 55 mole percent of recurring units of a dicarboxylic acid, wherein from about 75 to 100 mole percent of said dicarboxylic acid moiety recurring units are recurring units of a cyclic dicarboxylic acid moiety and (b) from about 45 to 60 mole percent of recurring units of an aliphatic diol, wherein from about 75 to 100 mole percent of said aliphatic diol recurring units are 2-methyl-1,3-propanediol. The hydroxyl number of the polyester is not greater than 34 milligrams of potassium hydroxide per gram of linear polyester, the combined acid and hydroxyl number is from about 15 to 75 milligrams of potassium hydroxide per gram of linear polyester, and the number average molecular weight of the linear polyester is in the range 1000 to 7500.

The linear polyester of this invention has the desirable advantage of having high cyclic content while being non-crystallizable. The linear polyester thus may be stored for extended periods of time at relatively low temperatures without solidification or precipitation of the linear polyester from solution.

Additionally, this invention affords a thermosettable resin composition suitable for forming a hard coating of improved flexibility. The thermosettable resin composition is comprised of the novel linear polyester of this invention, an amount of an aminoplast effective to cross-link the resin composition, and an amount of a catalyst sufficient to catalyze reaction of the linear polyester and the aminoplast. The resin composition may further comprise an organic solvent and a pigment. When cured, the resin compositions of this invention not only are unexpectedly hard, durable, and resistant to staining, but are also quite flexible. The cured coatings will typically have a pencil hardness of greater than 2H, while passing a 0-T bend test and a 685 mm/N (120 in/lbs). direct or reverse impact test. This combination of superior properties is surprising in view of the linear nature and high cyclic diacid content of the polyester.

### DETAILED DESCRIPTION OF THE INVENTION

At least about 75 mole percent of the aliphatic diol recurring units in the linear polyester are derived from 2-methyl-1,3-propanediol. This diol may be obtained by a number of synthetic routes. For example, the hydroformylation/ hydrogenation of allyl alcohol yields 2-methyl-1,3-propanediol in addition to 1,4-butanediol. Both of the hydroxyl groups of 2-methyl-1,3-propanediol are primary; condensation polymerization of this diol therefore is advantageously rapid. Similarly, polyester chains having terminal 2-methyl-1,3-propanediol groups react more quickly with the aminoplast cross-linking agent than polyesters having terminal hydroxy groups which are secondary. Without wishing to be bound by theory, it is believed that the flexibility and high hardness of the cured resin compositions of this invention are in some part due to the 1,3 arrangement of the hydroxyl groups and the non-symmetrical branched structure of 2-methyl-1,3-propanediol.

Optionally, from 0 up to about 25 mole percent of the aliphatic diol component may be a dihydroxy compound other than 2-methyl-1,3-propanediol. Any suitable aliphatic diol, especially those having up to six carbon atoms, may be used, including, for example, 1,2-diols such as ethylene glycol, 1,2-propylene glycol, and 1,2-butylene glycol, 1,3-diols such as neopentyl glycol, 1,3-propanediol, and 1,3-butanediol, 1,4-diols such as 1,4-butanediol, as well as other diols such as 2-methyl-1,3 pentanediol, 1,4-cyclohexanedimethanol, diethylene glycol, tripropylene glycol, and 1,6-hexanediol. In general, it is preferred that the molecular weight of the aliphatic diol not exceed about 250. Mixtures of aliphatic diols may be used. Preferably, however, 2-methyl-1,3-propanediol is the only diol present in the linear polyesters of this invention.

The dicarboxylic acid moiety may be derived from any suitable dicarboxylic acid or dicarboxylic acid derivative, provided that from about 75 to 100 mole percent of the dicarboxylic acid moiety is a cyclic dicarboxylic acid moiety. Depending on the method of polyester preparation selected, such compounds may comprise the parent diacid or the corresponding anhydride, ester, or acid halide. The cyclic dicarboxylic acid moiety may be either an aromatic or cycloaliphatic dicarboxylic acid; aromatic dicarboxylic acids are preferred. Examples of suitable aromatic dicarboxylic acids which may be used in the linear polyesters of this invention include phthalic acids such as isophthalic acid, terephthalic acid, and phthalic anhydride, as well as naphthalene dicarboxylic acids, biphenyl dicarboxylic acids, alkyl- or halo-substituted phthalic acids, and mixtures thereof. The most preferred aromatic dicarboxylic acid moiety is isophthalic acid. It is desirable that at least about 50 mole percent of the aromatic dicarboxylic acid moiety be isophthalic acid.

The cycloaliphatic dicarboxylic acids which may be used in this invention include, for example, cyclohexyl dicarboxylic acids and tetrahydrophthalic acids. Mixtures of aromatic and cycloaliphatic dicarboxylic acids may be employed.

The other dicarboxylic acid moiety which may be present in the linear polyester at a level of from 0 to to about 25 mole percent of the total dicarboxylic acid moiety content may be any non-cyclic dicarboxylic acid or derivative. Examples of such dicarboxylic acids include linear aliphatic dicarboxylic acids such as adipic acid, glutaric acid, maleic acid, succinic acid, and azelaic acid. Saturated linear dicarboxylic acids are preferred, particularly those containing from four to six carbon atoms. In general, increasing the proportion of linear aliphatic dicarboxylic acid tends to promote cured resin flexibility whereas increasing the proportion of cyclic dicarboxylic acid leads to improved hardness. In the most preferred embodiments of this invention, only cyclic dicarboxylic acids moieties are present in the linear polyester.

Any of the methods known in the art for the condensation reaction of aliphatic diols and dicarboxylic acids or dicarboxylic acid derivatives may be used to prepare the linear polyesters of this invention. Suitable methods are described, for example, in G. Odian Principles of Polymerization 2nd Ed., John Wiley and Sons, New York, 1981, pp. 102-105.The linear polyesters may be produced by direct esterification of a dicarboxylic acid or dicarboxylic acid anhydride with an aliphatic diol, by reaction of a dicarboxylic acid halide with an aliphatic diol, or by transesterification of a dicarboxylic acid ester with an aliphatic diol. For reasons of economy and convenience, direct esterification is the preferred method.

Typically, one or more aliphatic diols, one or more dicarboxylic acids, and (optionally) a condensation catalyst are combined in a reaction vessel and heated to between about 100°C and 280°C (preferably, between about 180°C and 250°C). The condensation catalyst may be, for example, a protic or Lewis acid, a base such as calcium acetate, antimony trioxide, or titanium tetralkoxide, or an alkyl tin compound such as dibutyl tin oxide, hydrated monobutyl tin oxide, or dibutyl tin dilaurate. The water produced as a by-product in the condensation reaction is preferably removed by distillation, either at atmospheric or reduced pressure. Any aliphatic diol removed overhead is preferably recycled to the reaction vessel. An azeotrope agent such as xylene, toluene, or other such organic solvent can be used to facilitate the removal of water; this is particularly advantageous in the latter stages of the condensation polymerization.

Condensation is continued until the desired viscosity, molecular weight, or combined acid and hydroxyl number is achieved. The linear polyester of this invention generally should have a combined acid and hydroxyl number of from about 15 to 75 milligrams of potassium hydroxide per gram of linear polyester and a hydroxyl number not greater than 34 milligrams of potassium hydroxide per gram. The number average molecular weight is from about 1000 to 7500. In preparing the linear polyester, it is usually preferred to use an excess of the aliphatic diol so as to have more hydroxy end-groups than carboxylic acid end-groups in the final product and to compensate for certain side reactions involving the aliphatic diols which sometimes occur.

Any of the aminoplast crosslinking agents known in the art are suitable for use as the aminoplast component in the resin composition of this invention. In general, suitable aminoglasts include urea-aldehyde resins, melamine-aldehyde resins, dicyandiamide-aldehyde resins, and triazine-aldehyde resins which have been alkylated with an alcohol such as methanol or butanol. Aldehydes useful for reacting with amino compounds to form the aminoplasts include, for example, formaldehyde, acetaldehyde, and acrolein as well as aldehyde precursors such as paraformaldehyde and hexamethylenetetramine. Other examples of suitable aminoplasts are described in U.S. Pat. No. 3,804,920.

A preferred class of aminoplasts include melamine derivatives having at least four 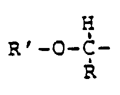 groups attached to the amino groups of the melamine structure, wherein R is hydrogen or a monovalent alkyl radical containing from 1 to 5 carbon atoms and R' is an alkyl group containing from 1 to 6 carbon atoms.

Hexamethoxymethyl melamine is an example of such an aminoplast which is particularly preferred for use in this invention. The amount of aminoplast used should be sufficient to effect crosslinking of the resin composition and to provide a thermoset cured coating. Preferably, the aminoplast is used at a level of from about 1 to 35 weight percent of the total weight of the resin composition. More preferably, from about 5 to 20 weight percent aminoplast is present.

Any catalyst capable of catalyzing the crosslinking reaction of the linear polyester and the aminoplast can be used in the resin composition of this invention. Suitable catalysts include acid catalysts and metal salt catalysts, for example. Typically, a suitable acid catalyst will have a pkₐ value of about 2 or less. The acid catalyst may be an acid or a derivative which will generate the acid in situ during curing. Examples of suitable acid catalysts include all of the acids generally used for curing aminoplast/polyester compositions such as sulfonic acids (e.g, p-toluene sulfonic acid, benzene sulfonic acid, methyl sulfonic acid), mineral acids (e.g., nitric acid, phosphoric acid), mono- or dialkyl phosphoric acids (e.g., butyl phosphoric acid), and carboxylic acids (e.g., trichloroacetic acid, fluoroacetic acid). Suitable metal salts usable as catalysts in accordance with this invention include, for example, magnesium bromide, aluminum nitrate, and zinc nitrate. In effecting the cure of the resin composition of this invention, the rate of cure is dependent on both the cure temperature and the concentration and structure of the catalyst. Therefore, the amount of catalyst used will vary, but should be sufficient to catalyze the desired crosslinking reaction under the cure conditions selected. In general, the resin composition preferably contains from about 0.05 to 1.0 parts catalyst per 100 parts of binder (linear polyester + aminoplast).

An organic solvent may be blended with the resin composition of this invention in order to reduce the viscosity of the uncured composition and to provide a volatile vehicle to convey the resin composition to the substrate to be coated. Preferably, the organic solvent does not interfere with the crosslinking reaction during curing. The proportion of organic solvent to binder (linear polyester + aminoplast) composition is not critical, but generally the amount of solvent used will be between 20 and 55 weight percent in the coating composition. The solvents utilizable in the resin compositions of this invention may be any of the usual volatile solvents used in paints and coatings. Examples of suitable solvents include aromatic hydrocarbons such as toluene and xylene, ketones such as methyl ethyl ketone and isophorone, alcohols such as butanol and 2-ethyl hexanol, glycol ethers such as propylene glycol methyl ether and ethylene glycol ethyl ether, and glycol esters such as propylene glycol mono-acetate and ethylene glycol diacetate. Mixtures of solvents may be advantageously employed.

A pigment may be incorporated into the resin composition to impact color or opacity to the final cured coating. A preferred pigment is titanium dioxide, but any other suitable pigment may also be used. Examples of such pigments include, but are not limited to, zinc oxide, bentonite, silica, chrome yellow, chrome orange, chrome green, ferric oxide, and ocher. The amount of pigment used will depend on the appearance desired; typically a ratio of pigment to resin composition of between about 0.6 to 1.3 is preferred. A leveling agent or flow control agent such as an acrylic flow modifying resin may also be added to the resin composition to achieve optimum coating appearance.

The resin compositions of this invention can be applied to any suitable substrate, including, for example, paper, leather, wood, plastic, cloth, or (most preferably) metal. The compositions are particularly appropriate for coating steel, (especially steel coil), aluminum, copper, tin-plated steel, electro-galvanized steel, and hot dipped galvanized steel. Such metal substrates may be cleaned and/or chemically treated to enhance the wetting and adhesion of the applied coating. The resin compositions of this invention are equally useful as primers or top coats in combination with either the same or different types of coating compositions.

The resin compositions of this invention may be applied to a substrate using any of the usual methods of coating application including spraying, direct roll coating, reverse roll coating, electrodeposition, and flow coating. The compositions are cured by heating the coatings after application for a time and at a temperature sufficient to accomplish substantial cross-linking of the linear polyester and the aminoplast. Typically, cure is achieved by heating at 120° to 350°C for between 5 seconds and 30 minutes. The resin composition may be applied to a preheated substrate if a more rapid cure is desired.

Without further elaboration, it is believed that one skilled in the art can, using the preceding description, utilize the present invention to its fullest extent. The following examples, therefore, are to be considered as merely illustrative. The properties of the cured resin compositions described in the examples were evaluated using the test methods described in ASTM D3794.

### EXAMPLES

### Example 1

A 1 liter reaction flask was charged with 146.7 grams 2-methyl-1,3-propanediol, 221.7 grams isophthalic acid, 31.6 grams adipic acid and 0.141 grams hydrated monobutyl tin oxide (Fascat® 4100, a product of M&T Chemicals). The contents were heated to 210°C and maintained at this temperature while water was continuously removed through a packed distillation column which was held at 105°C. The acid number was periodically determined. When the acid number reached a value of 8.5 milligrams KOH per gram resin, the heating was discontinued. Aromatic 150 (a product of Exxon) was added to the polyester as it cooled; the resulting solution was further diluted to 62% solids with propylene glycol methyl ether acetate (ARCOSOLV® PMAc, a product of ARCO Chemical Co.). The final ratio of Aromatic 150 to ARCOSOLV® PMAc was 3/1. The diluted product had a final acid number of 6.5 milligrams KOH per gram, a hydroxyl number of 22.6 milligrams KOH per gram, a Gardner-Holdt viscosity of Z4 and a Gardner color of <1.

The polyester solution was combined with 10% hexamethoxymethyl-melamine (Cymel® 303 a product of American Cyanamid) based upon dry polyester and pigmented with titanium dioxide (Titanox® 2090, a product of NL Chemicals) at a pigment to binder (polyester + aminoplast) ratio of 1:1. This composition was diluted to 65 weight percent solids with ARCOSOLV® PMAc and combined with sufficient 25% p-toluenesulfonic acid in isopropanol to yield a 0.5 weight % catalyst concentration. Flow control additive (0.02% Fluorad® FC-430, a product of 3M Corp.) was also added. This formulation was drawn down on a Bonderite® 1000 (a product of Henkel Corp.) treated cold rolled steel panel (available from Parker-Amchem) with a wire wound rod and cured at 245°C for 75 seconds. The 0.025 mm (1.0 mil) thickness coating exhibited +200 MEK double rubs resistance, 4H pencil hardness, 48 Sward hardness and a 60° gloss of 85. The coating passed a O-T Bend test with no loss of adhesion or cracking after 30 minutes in an oven at 93°C (200°F) or after 5 minutes submersion in hot water 88-93°C (190-200°F). In addition, the coating exhibited a Gardner impact resistance of 160 913 mm/N (in/lbs) for direct and indirect impact.

The high hardness and exceptional flexibility of the coating are attributed to the composition of the polyester employed, which had a high isophthalic acid and 2-methyl-1,3-propanediol content. In addition, the coating displayed exceptional stain resistance. Four stains (mustard, ketchup, shoe polish and lipstick) failed to stain the coated panels.

### Example 2-9

Table 1 lists additional examples of linear polyesters which were prepared by methods similar to those described in Example 1.

### Example 10

The linear polyester of Example 2 was combined with 13.7% hexamethoxymethylmelamine on polyester, titanium dioxide (to give a pigment to binder ratio of 1:1) and ARCOSOLV® PMAC to yield a coating composition with 65 weight % solids. The composition was combined with a 25% solution of p-toluenesulfonic acid in isopropanol (0.05% acid on binder) and 0.02% on binder flow control additive (Fluorad® FC-430). The resulting composition was applied to a cold rolled steel panel and cured at 245°C for 75 seconds. The dry coating thickness was 0.025 mm (1.0 mil). The coating had a pencil hardness of 5H, a Sward hardness of 44, a 60°degree gloss of 99, and a +200 MEK double rubs resistance. The coating displayed a 0-T bend and passed a 913 mm/N (160 in/lbs) direct and indirect impact test.

### Example 11

The linear polyester of example 3 was combined with 12.5% hexamethoxymethylmelamine (12.5%), titanium dioxide, PMAc, catalyst and Fluorad® FC-430 flow control additive. The pigment to binder level was 1:1 and the final solids level was 65%. Catalyst (25% p-toluenesulfonic acid in isopropanol) and flow additive were present at levels of 0.5% and 0.02% on binder respectively. The coating was cured as in Example 1 and yielded a resilient 0.025 mm (1.0 mil) film. The cured coating exhibited +200 MEK double rubs, a Sward hardness of 52, a pencil hardness of 4H, a 60°gloss of 92, a 913 mm/N (160 in/lbs) reverse impact and a 913 mm/N (160 in/lbs) direct impact resistance. Additionally, the coating exhibited a O-T bend with no failure upon heating to 93°C (200°F) for thirty minutes.

### Example 12

The linear polyester of example 5 was combined with 12.5 weight percent hexamethoxymethylmelamine, titanium dioxide (to give a pigment to binder ratio of 1:1) and ARCOSOLV® PMAc such that the final weight percent solids was 65%. The composition was combined with a 25% solution of p-toluenesulfonic acid in isopropanol (0.5 wt. % on binder) and further treated with Fluorad® FC-430 flow control additive (0.02% on binder). The coating was cured at 240°C for 125 seconds and yielded a 0.023 mm (0.9 mil) film with a 2H pencil hardness, a 60°gloss of 87, and which passed an 0-T bend test and 913 mm/N (160 in/lbs) direct impact and reverse impact tests.

### Comparative Example 13

Isophthalic acid (58.77 wt. %) propylene glycol (32.79 wt. %) and adipic acid (8.78 wt. %) were charged into a reactor and esterified as in Example 1. The polyester had a final acid number of 9 mg KOH/gram polyester. This polyester was combined with 13.7% hexamethoxymethylmelamine, titanium dioxide, ARCOSOLV® PMAc, p-toluenesulfonic acid and a flow control additive (Fluorad® FC-430). The pigment to binder ratio was 1:1, the final solids level was approximately 65%; the catalyst to binder ratio was 0.5%, and the flow additive level was 0.02 wt. percent of the binder.

The coating was applied to a panel of Bonderite® 1000 treated cold rolled steel and cured at 245°C for 45 seconds. The resulting 0.025 mm (1.0 mil) film had a pencil hardness of 5H, a Sward hardness of 54 and a 60° gloss of 99. However, the film exhibited very poor flexibility. The best fabrication T-bend test which this film passed was a 6-T bend. Such poor flexibility is often observed using high cyclic diacid content polyesters. The 2-methyl-1,3-propanediol based polyesters of this invention with high cyclic diacid content yield cured coatings having much greater flexibility.

### Comparative Example 14

Isophthalic acid (50.44 wt. %), neopentyl glycol (40.10 wt. %), and adipic acid (9.46 wt. %) were charged into a reaction kettle and esterified as in Example 1. However, upon completion of the polyesterification and dilution with solvent, the mixture started to become heterogeneous. Within 12 hours, the polyester had crystallized and precipitated. Such crystallizable polyesters are not suitable for coating applications.

This example demonstrates the potential drawbacks of using high levels of isophthalic acid in polyester coating resins, namely, polyester crystallinity and short shelf life. Such problems do not occur when significant levels of 2-methyl-1,3-propanediol are incorporated into the linear polyester in accordance with the present invention.

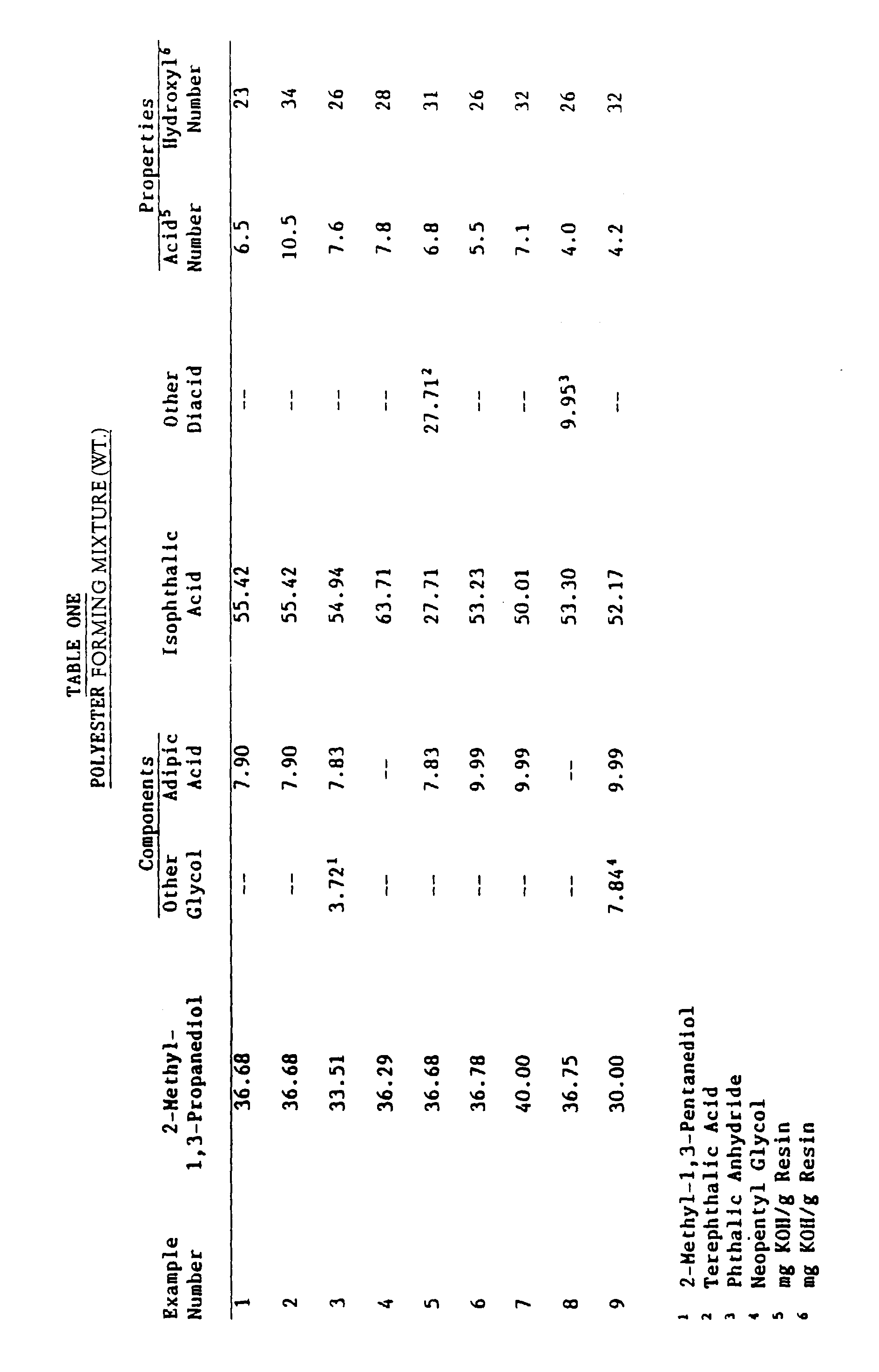

## Claims

1. A linear polyester suitable for use in a thermoset resin coating of improved flexibility and hardness, said linear polyester comprising:
(a) from 40 to 55 mole percent of recurring units of a dicarboxylic acid, wherein from 75 to 100 mole percent of said dicarboxylic acid moiety recurring units are recurring units of a cyclic carboxylic acid moiety; and
(b) from 45 to 60 mole percent of recurring units of an aliphatic diol, wherein from 75 to 100 mole percent of said aliphatic diol recurring units are 2-methyl-1,3-propanediol;
wherein the linear polyester has a hydroxyl number not greater than 34 milligrams of KOH per gram of linear polyester, a combined acid and hydroxyl number of from 15 to 75 milligrams of potassium hydroxide per gram of linear polyester and a number average molecular weight in the range 1,000-7,500.

2. A linear polyester as claimed in claim 1 wherein the cyclic dicarboxylic acid is isophthalic acid.

3. A linear polyester as claimed in claim 2 derived from a polyester-forming mixture comprising 0 to 10 wt% adipic acid, 50 to 63.71 wt.% isophthalic acid and 30 to 40 wt.% 2-methyl-1,3-propanediol, all wt.%s being based on the total weight of the polyester-forming mixture.

4. A thermosettable resin composition suitable for forming a coating of improved hardness and flexibility, said thermosettable resin composition comprising:
(a) a linear polyester as claimed in any one of claims 1 to 3
(b) an amount of an aminoplast effective to crosslink the resin composition; and
(c) an amount of a catalyst sufficient to catalyze reaction of the linear polyester and aminoplast.

5. The resin composition of claim 4 wherein the aminoplast is a melamine derivative having at least four 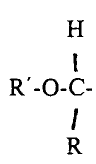 groups attached to the amino groups of the melamine structure, where R is hydrogen or a monovalent alkyl radical containing from 1 to 5 carbon atoms and R' is an alkyl group containing 1 to 6 carbon atoms.

6. The resin composition of claim 5 wherein the aminoplast is hexamethoxymethyl melamine.

7. The resin composition of any one of claims 4 to 6 further comprising an organic solvent.

8. The resin composition of any one of claims 4 to 7 further comprising a pigment.

9. A substrate having a coating of a cured resin composition of any one of claims 4 to 8.

10. A process for producing a coating of improved flexibility and hardness comprising (a) applying the thermosettable resin composition of any one of claims 4 to 8 to a substrate; and (b) heating the thermosettable resin composition for a time and at a temperature sufficient to accomplish substantial cross-linking of the linear polyester and the aminoplast.

11. A process for producing a linear polyester as claimed in any one of claims 1 to 3, said process comprising the steps of:
(a) combining in a reaction zone
(i) from 40 to 55 mole percent of a dicarboxylic acid, wherein from 75 to 100 mole percent of the dicarboxylic acid is a cyclic dicarboxylic acid.
(ii) from 45 to 60 mole percent of an aliphatic diol, wherein from 75 to 100 mole percent of the aliphatic diol is 2-methyl-1,3-propanediol; and
(iii) an amount of a catalyst effective to accomplish substantial condensation polymerization of the dicarboxylic acid and the aliphatic diol; and
(b) heating the resultant mixture for a time and at a temperature sufficient to form the linear polyester, said linear polyester having a hydroxyl number not greater than 34 milligrams of potassium hydroxide per gram of linear polyester, a combined acid and hydroxyl number of from 15 to 75 milligrams of potassium hydroxide per gram of linear polyester and a number average molecular weight in the range 1,000-7,500.

12. The process of claim 11, further comprising adding an organic solvent so as to obtain a linear polyester solution.

13. The process of claim 11 or claim 12, wherein water is removed from the reaction zone during step (b).

14. A process as claimed in any one of claims 11 to 13 which comprises the steps of:
(a) combining in a reaction zone
(i) from 40 to 55 mole percent of a cyclic dicarboxylic acid, wherein from 75 to 100 mole percent of said cyclic carboxylic acid is an aromatic dicarboxylic acid;
(ii) from 45 to 60 mole percent of 2-methy-1,3-propanediol; and
(iii) an amount of a catalyst effective to accomplish substantial condensation polymerization of the cyclic dicarboxylic acid and the 2-methy-1,3-propanediol; and
(b) heating the resultant mixture for a time and at a temperature sufficient to form the linear polyester while simultaneously removing water from the reaction zone.

## Patentansprüche

1. Linearer Polyester, der zur Verwendung in einer wärmehärtbaren Harzschicht mit verbesserter Flexibilität und Härte geeignet ist, welcher enthält:
(a) von 40 bis 55 Mol-% wiederkehrende Einheiten einer Dicarbonsäure, bei der von 75 bis 100 Mol-% der wiederkehrenden Einheiten der Dicarbonsäuregruppe wiederkehrende Einheiten einer cyclischen Carbonsäuregruppe sind, und
(b) von 40 bis 60 Mol-% wiederkehrende Einheiten eines aliphatischen Diols, bei dem von 75 bis 100 Mol-% der wiederkehrenden Einheiten des aliphatischen Diols 2-Methyl-1,3-propandiol sind, wobei
der lineare Polyester eine Hydroxyzahl von nicht über 34 mg KOH/g linearer Polyester, eine kombinierte Säure- und Hydroxyzahl von 15 bis 75 mg KOH/g linearer Polyester und ein zahlenmittleres Molekulargewicht im Bereich von 1.000 - 7.500 aufweist.

2. Linearer Polyester nach Anspruch 1, bei dem die cyclische Dicarbonsäure Isophthalsäure ist.

3. Linearer Polyester nach Anspruch 2, der von einem Polyester bildenden Gemisch abgeleitet ist, welche 0 bis 10 Gew.-% Adipinsäure, 50 bis 63,71 Gew.-% Isophthalsäure und 30 bis 40 Gew.-% 2-Methyl-1,3-propandiol enthält, wobei alle Gew.-%-Angaben auf das Gesamtgewicht des Gemisches Polyester bildenden bezogen sind.

4. Wärmehärtbare Harzzusammensetzung, die zur Bildung einer Schicht mit verbesser-ter Härte und Flexibilität geeignet ist, wobei die wärmehärtbare Harzzusammensetzung umfaßt:
(a) einen linearen Polyester nach einem der Ansprüche 1 bis 3,
(b) eine Menge eines Aminoplast, die zur Vernetzung der Harzzusammensetzung wirksam ist, und
(c) eine Menge eines Katalysators, die zur Katalysierung der Reaktion des linearen Polyesters und Aminoplasten ausreichend ist.

5. Harzzusammensetzung nach Anspruch 4, bei der der Aminoplast ein Melaminderivat mit mindestens 4 R'-O-CH-R-Gruppen ist, die an die Aminogruppen der Melaminstruktur gebunden sind, ist, wobei R Wasserstoff oder ein einwertiger Alkylrest mit 1 bis 5 Kohlenstoffatomen und R' eine Alkylgruppe mit 1 bis 6 Kohlenstoffatomen ist.

6. Harzzusammensetzung nach Anspruch 5, bei der der Aminoplast Hexamethoxymethylmelamin ist.

7. Harzzusammensetzung nach einem der Ansprüche 4 bis 6, welche weiter ein organisches Lösungsmittel enthält.

8. Harzzusammensetzung nach einem der Ansprüche 4 bis 7, welche weiter ein Pigment enthält.

9. Substrat mit einer Schicht aus einer gehärteten Harzzusammensetzung nach einem der Ansprüche 4 bis 8.

10. Verfahren zur Herstellung einer Schicht mit verbesserter Flexibilität und Härte, welches umfaßt:
(a) Aufbringen der wärmehärtbaren Harzzusammensetzung nach einem der Ansprüche 4 bis 8 auf ein Substrat, und
(b) Erhitzen der wärmehärtbaren Harzzusammensetzung für eine Zeitspanne und eine Temperatur, die ausreichend ist, um ein wesentliches Vernetzen des linearen Polyesters und des Aminoplasten zu bewirken.

11. Verfahren zur Herstellung eines linearen Polyesters nach einem der Ansprüche 1 bis 3, welches die folgenden Schritte umfaßt:
(a) Vereinigen in einer Reaktionszone
(i) von 40 bis 55 Mol-% einer Dicarbonsäure, wobei von 75 bis 100 Mol-% der Dicarbonsäure eine cyclische Dicarbonsäure ist,
(ii) von 45 bis 60 Mol-% eines aliphatischen Diols, wobei von 75 bis 100 Mol-% des aliphatischen Diols 2-Methyl-1,3-propandiol ist, und
(iii) eine Menge eines Katalysators, die wirksam ist, um eine wesentliche Konden sationspolymerisation der Dicarbonsäure und des aliphatischen Diols zu erreichen, und
(b) Erhitzen des so erhaltenen Gemisches für eine Zeitspanne und Temperatur, die zur Bildung eines linearen Polyesters ausreichend ist, wobei der lineare Polyester eine Hydroxy-zahl von nicht über 34 mg KOH/g linearer Polyester, eine kombinierte Säure- und Hydroxyzahl von 15 bis 75 mg KOH/g linearer Polyester und ein zahlenmittleres Molekulargewichtel im Bereich von 1.000 - 7.500 aufweist.

12. Verfahren nach Anspruch 11, welches weiter Zugabe eine organischen Lösungsmittels umfaßt, um eine Lösung eines linearen Polyesters zu erhalten.

13. Verfahren nach Anspruch 11 oder Anspruch 12, wobei während Schritt (b) Wasser aus der Reaktionszone entfernt wird.

14. Verfahren nach einem der Ansprüche 11 bis 13, welches die folgenden Schritte umfaßt:
(a) Vereinigen in einer Reaktionszone
(i) von 40 bis 55 Mol-% einer cyclischen Dicarbonsäure, wobei von 75 bis 100 Mol-% der cyclischen Carbonsäure eine aromatische Dicarbonsäure ist,
(ii) von 45 bis 60 Mol-% 2-Methyl-1,3-propandiol, und
(iii) eine Menge eines Katalysators, die wirksam ist, um eine wesentliche Konden sationspolymerisation der cyclischen Dicarbonsäure und des 2-Methyl-1,3- propandiol zu erreichen, und
(b) Erhitzen des so erhaltenen Gemisches für eine Zeitspanne und Temperatur, die zur Bildung eines linearen Polyesters ausreichend ist, wobei gleichzeitig aus der Reaktionszone Wasser entfernt wird.

## Revendications

1. Polyester linéaire utilisable dans un revêtement de résine thermodurci présentant des flexibilité et dureté améliorées, ce polyester linéaire comprenant:
(a) de 40 à 55% en moles d'unités récurrentes d'un acide dicarboxylique, dans lesquelles de 75 à 100% en moles de ces unités récurrentes de la partie acide dicarboxylique sont des unités récurrentes d'une partie acide carboxylique cyclique; et
(b) de 45 à 60% en moles d'unités récurrentes d'un diol aliphatique, dans lesquelles de 75 à 100% en môles de ces unités récurrentes de diol aliphatique sont du 2-méthyl-1,3-propanediol,
dans lequel le polyester linéaire a un indice hydroxy ne dépassant pas 34 mg de KOH par g de polyester linéaire, un indice d'acide et hydroxy combiné de 15 à 75 mg de KOH par g de polyester linéaire et un poids moléculaire moyen en nombre compris dans la gamme de 1.000 à 7.500.

2. Polyester linéaire suivant la revendication 1, dans lequel l'acide dicarboxylique cyclique est l'acide isophtalique.

3. Polyester linéaire suivant la revendication 2 obtenu à partir d'un mélange formant un polyester comprenant 0 à 10% en poids d'acide adipique, 50 à 63,71% en poids d'acide isophtalique et 30 à 40% en poids de 2-méthyl-1,3-propanediol, tous les pourcentages en poids étant basés sur le poids total du mélange formant un polyester.

4. Composition de résine thermodurcissable convenable pour former un revêtement de dureté et de flexibilité améliorées, cette composition de résine thermodurcissable comprenant:
(a) un polyester linéaire suivant l'une quelconque des revendications 1 à 3;
(b) une quantité d'une aminoplaste efficace pour réticuler la composition de résine; et
(c) une quantité d'un catalyseur suffisante pour catalyser la réaction du polyester linéaire et de l'aminoplaste.

5. Composition de résine suivant la revendication 4, dans laquelle l'aminoplaste est un dérivé de mélamine ayant au moins quatre groupes R'-O-CHR'- attachés aux groupes amino de la structure mélamine, où R est un atome d'hydrogène ou un radical alkyle monovalent contenant de 1 à 5 atomes de carbone et R' est un groupe alkyle contenant 1 à 6 atomes de carbone.

6. Composition de résine suivant la revendication 5, dans laquelle l'aminoplaste est l-hexaméthoxyméthyl mélamine.

7. Composition de résine suivant l'une quelconque des revendications 4 à 6, comprenant de plus un solvant organique.

8. Composition de résine suivant l'une quelconque des revendications 4 à 7, comprenant de plus un pigment.

9. Substrat ayant un revêtement d'une composition de résine durcie suivant l'une quelconque des revendications 4 à 8.

10. Procédé pour la production d'un revêtement de flexibilité et de dureté améliorées, comprenant :
(a) l'application de la composition de résine thermodurcissable suivant l'une quelconque des revendications 4 à 8 sur un substrat; et
(b) le chauffage de la composition de résine thermodurcissable pendant une période de temps et à une température suffisantes pour accomplir une notable réticulation du polyester linéaire et de l'aminoplaste.

11. Procédé pour la production d'un polyester linéaire suivant l'une quelconque des revendications 1 à 3, ce procédé comprenant les étapes de :
(a) combinaison dans une zone réactionnelle :
(i) de 40 à 55% en moles d'un acide dicarboxylique, dans lesquelles de 75 à 100% en moles de l'acide dicarboxylique sont constitués par un acide dicarboxylique cyclique; et
(ii) de 45 à 60% en moles d'un diol aliphatique, dans lesquelles de 75 à 100% en moles du diol aliphatique sont constitués par du 2-méthyl-1,3-propanediol, et
(iii) d'une quantité d'un catalyseur efficace pour accomplir une notable polymérisation par condensation de l'acide dicarboxylique et du diol aliphatique; et
(b) chauffage du mélange résultant pendant une période de temps et à une température suffisantes pour former le polyester linéaire, ce polyester linéaire ayant un indice hydroxy ne dépassant pas 34 mg de KOH par g de polyester linéaire, un indice d'acide et hydroxy combiné de 15 à 75 mg de KOH par g de polyester linéaire et un poids moléculaire moyen en nombre compris dans la gamme de 1.000 à 7.500.

12. Procédé suivant la revendication 11, comprenant de plus l'addition d'un solvant organique de façon à obtenir une solution de polyester linéaire.

13. Procédé suivant les revendications 11 ou 12, dans lequel de l'eau est éliminée de la zone réactionnelle pendant l'étape (b).

14. Procédé suivant l'une quelconque des revendications 11 à 13, ce procédé comprenant les étapes de :
(a) combinaison dans une zone réactionnelle :
(i) de 40 à 55% en moles d'un acide dicarboxylique cyclique, dans lesquelles de 75 à 100% en moles de cet acide carboxylique cyclique sont constitués par un acide dicarboxylique aromatique; et
(ii) de 45 à 60% en moles de 2-méthyl-1,3-propanediol, et
(iii) d'une quantité d'un catalyseur efficace pour accomplir une notable polymérisation par condensation de l'acide dicarboxylique cyclique et du 2-méthyl-1,3-propanediol; et
(b) chauffage du mélange résultant pendant une période de temps et à une température suffisantes pour former le polyester linéaire, avec élimination simultanée d'eau hors de la zone réactionnelle.
